# EUROPÄISCHE PATENTSCHRIFT

(11) **EP 2 865 354 B1**
(45) Veröffentlichungstag und Bekanntmachung des Hinweises auf die Patenterteilung: **19.09.2018**
(21) Anmeldenummer: 14198376.7
(22) Anmeldetag: 31.01.2012
(51) Int. Cl.: A61C 8/00

(54) **Implantat-Teil**
Implant part
Partie d'implant

(30) Priorität: 31.01.2011 DE 102011009906
(43) Veröffentlichungstag der Anmeldung: 29.04.2015
(62) Teilanmeldung aus: 12706189.3
(73) Patentinhaber: Zipprich, Holger, 64342 Malchen (DE)
(72) Erfinder: Zipprich, Holger, 64342 Malchen (DE)
(74) Vertreter: Walkenhorst, Andreas

(56) Entgegenhaltungen:
- WO-A1-2006/109176
- WO-A2-02/26154
- WO-A2-2004/073541
- DE-A1-102006 036 020
- DE-A1-102008 054 138

## Beschreibung

Die Erfindung betrifft ein zur Einbringung in einen Kieferknochen vorgesehenes, außenseitig mit einem Außengewinde versehenes Implantat-Teil, das zur mechanischen Verbindung mit einem zugeordneten, zur Anbringung eines Zahnersatzstücks vorgesehenen zweiten Implantat-Teil einen Aufnahmekanal für einen an das zweite Implantat-Teil angeformten Verbindungszapfen aufweist.

DE102008054138 offenbart ein solches Implantat. Zum Ausgleich des Verlusts eines Zahnes können im Rahmen der rekonstruktiven Therapie Dentalimplantate zum Einsatz kommen. Sie werden üblicherweise anstelle eines extrahierten oder ausgefallenen Zahnes in den Kieferknochen eingesetzt, um dort nach einer Einheilphase von etwas vier bis zwölf Wochen ein als Zahnersatz dienendes prothetisches Teil oder eine Krone zu halten. Dazu ist ein derartiges Dentalimplantat üblicherweise als geeignet geformter Metallkörper ausgebildet, der durch Einschrauben an der vorgesehenen Stelle in den Kieferknochen eingesetzt wird. Das Dentalimplantat weist dabei in der Regel am apikalen Ende ein zumeist selbstschneidendes Schraubengewinde auf, mit welchem das Dentalimplantat in das entsprechend präparierte Implantatbett eingesetzt wird. Um eine erleichterte Einbringung in den Patientenmund und insbesondere eine besonders weitgehende Vorbereitung der eigentlichen Prothese bei der Anbringung an das Implantat bereits im Vorfeld der Patientenbehandlung, beispielsweise in einem zahntechnischen Labor, zu ermöglichen, können Dental-Implantatsysteme mehrteilig ausgeführt sein. Insbesondere kann dabei ein grundsätzlich zweiteiliger Aufbau vorgesehen sein, wobei das Dental-Implantatsystem ein erstes, zur Einbringung in den Kieferknochen vorgesehenes, auch als eigentliches Implantat oder Pfostenteil bezeichnetes Implantat-Teil und zusätzlich zu diesem ein zugeordnetes zweites, auch als Aufbauteil bezeichnetes zweites Implantat-Teil umfasst, an das wiederum das als Prothese oder dergleichen vorgesehene Zahnersatzstück anbringbar ist. Das erste Implantat-Teil oder Pfostenteil ist an seiner Außenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantatbett des Kieferknochens verankert. Die Konstruktion des im Außenbereich des Dentalimplantats vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

Zur mechanischen Verbindung der Implantat-Teile miteinander ist üblicherweise ein an eines der Implantat-Teile, in der Regel an das Aufbauteil, angeformter Verbindungszapfen vorgesehen. Dieser ist in einen im anderen Implantat-Teil, in der Regel im Pfostenteil, vorgesehenen Aufnahmekanal einschiebbar. Hinsichtlich Geometriewahl und Dimensionierung, insbesondere der Querschnitte, sind der Verbindungszapfen einerseits und der Aufnahmekanal andererseits dabei üblicherweise derart aneinander angepasst, das bei vergleichsweise einfacher Montierbarkeit dennoch eine gute Führung der Bauteile ineinander und damit eine ausreichend hohe mechanische Stabilität erreichbar sind. Das Aufbauteil, das üblicherweise an seinem oberen Bereich mit einer Krone, einer anderen prothetischen Versorgung oder dergleichen in an sich bekannter Weise ausgestattet wird, kann dabei zur mechanischen Verbindung mit dem Pfostenteil über den in den Aufnahmekanal eingeschobenen Verbindungszapfen mit dem Pfostenteil verklebt sein. Das Aufbauteil kann aber auch in das Pfostenteil eingepresst werden und lediglich über eine Verklemmung fixiert werden, oder auch zusätzlich durch eine Zementierung oder Verklebung fixiert werden.

Im Hinblick auf die bei der Kaubelastung auftretenden Kräfte und die gewünschte Langlebigkeit bei der Verwendung eines derartigen Dentalimplantats ist die mechanische Stabilität der Anordnung gegenüber verschiedenartigen Belastungen von besonderer Bedeutung. Insbesondere soll dabei in der Regel auch einer Rotation oder Verdrehung zwischen dem Aufbauteil und dem Pfostenteil durch äußere Kräfte, meist bedingt durch die Kaubelastung, entgegengewirkt werden. Dazu wird üblicherweise eine mechanische Indizierung in Form einer mechanischen Sperre verwendet, oder es wird die Flächenpressung zwischen dem Aufbauteil und dem Pfostenteil geeignet gewählt. Zur Indizierung und zur Vermeidung der Rotation des Aufbauteils auf dem Pfostenteil kann insbesondere eine geeignete Konturierung des Querschnitts des Verbindungszapfens einerseits und des diesem zugeordneten Aufnahmekanals andererseits vorgesehen sein, um die genannte mechanische Sperre zu bilden.

Die mechanische Sperre zwischen Aufbauteil und Pfostenteil mehrteiliger Implantatsysteme in der Art einer Indizierung dient aber nicht nur dem Zweck, einer Rotationsbelastung entgegenzuwirken, sondern soll insbesondere auch das korrekte und positionsgenaue Einbringen des Implantats in den Patientenmund bei möglichst kurz gehaltener Behandlungsdauer begünstigen. Nach der Einbringung des eigentlichen Implantats, vorzugsweise nach der Einheilung der Pfostenteile, müssen bei derartigen Systemen nämlich zur Anfertigung der Krone, der Brücke oder anderer Prothesen die räumlichen und geometrischen Informationen der Restbezahnung (beispielsweise Antagonisten, mesial und distal der Insertionsstelle stehende Zähne), der Schleimhaut und des Pfostenteils oder Implantats oder des montierten Aufbauteils erfasst werden. Diese räumlichen und geometrischen Informationen sind notwendig, um die Krone, Brücke oder dergleichen passgenau und anatomisch optimiert zu fertigen.

Zu diesem Zweck wird üblicherweise eine Abformung, vorzugsweise aus Silikon oder einem anderen dentalen Abformmaterial, von der Mundsituation angefertigt. Diese Abformung wird vorzugsweise mit Gips oder einem anderen dentalen Modellwerkstoff ausgegossen. Dieses Gipsmodell ist somit ein Duplikat der Mundsituation des Patienten/der Patientin. Es liefert dem Zahnarzt und/oder dem Zahntechniker die Informationen über die Position der Restbezahnung, der Schleimhaut und des inserierten Pfostenteils oder Implantats.

Zur Verbesserung der Übertragung von Position und Geometrie der inserierten Pfostenteile oder Implantate werden vorzugsweise spezielle Abformpfosten aus Metall und/oder Kunststoff auf die inserierten Pfostenteile oder Implantate gesteckt und/oder geschraubt. Anschließend wird die Abformung im Mund vorzugsweise mit Silikon angefertigt. Nach der Aushärtung des Abformmaterials verbleibt der Abformpfosten bei der Abdruckentnahme entweder auf dem Implantat oder wird mit der Abformung entnommen. Beim Ausgießen der Abformung muss der Abformpfosten oder Aufbaupfosten in der Abformung platziert werden und mit einem Laborimplantat verbunden sein. Dieses Laborimplantat besitzt bzgl. der Verbindung und geometrisch in Richtung des Abformpfostens oder Aufbaupfostens gleiche oder ähnliche geometrische Gestalt wie das inserierte Pfostenteil oder Implantat. Nach dem Ausgießen der Abformung mit integriertem Abformpfosten oder Aufbaupfosten und integriertem Laborimplantat erhält man ein Gipsmodell mit eingegossenem Laborimplantat.

Besitzt das verwendete Implantatsystem eine Indizierung, so wurde diese vom Patientenmund auf das Gipsmodell übertragen. Basierend auf diesem Gipsmodell wird die prothetische Versorgung des Implantats oder der Implantate geplant und gefertigt. Hierbei nimmt die rotatorische Position des Aufbauteils auf dem Implantat eine entscheidende Rolle ein. Durch die genannte Indizierung des Implantatsystems sind die Positioniermöglichkeiten des Aufbauteils auf dem Laborimplantat begrenzt, so dass mit geringem Aufwand und auf besonders einfache Weise beim Aufbringen des Aufbauteils die korrekte Positionierung sichergestellt werden kann.

Die Indizierung, also die Festlegung der möglichen rotatorischen Ausrichtung zwischen Aufbauteil einerseits und Pfostenteil andererseits wird üblicherweise durch eine geeignete Vorgabe der Querschnittskontur des Verbindungszapfens einerseits und des Aufnahmekanals andererseits in deren Verbindungsbereich erreicht. Üblicherweise sind dazu der Verbindungszapfen und dementsprechend auch der Aufnahmekanal im Querschnitt sechskantförmig ausgeführt. Bei einer Sechskantverbindung sind sechs Positioniermöglichkeiten des Aufbauteils auf dem Pfostenteil gegeben. Alternativ sind aber auch Ausführungen als Torks oder so genannte Vielzahlsysteme mit variierender Elementanzahl und variierender Geometrie bekannt, wobei sich die Anzahl der Positioniermöglichkeiten aus der Rotationssymmetrie des Querschnitts im Verbindungsbereich zwischen Verbindungszapfen und Aufnahmekanal ergibt. Bei einem Implantatsystem ohne Indizierung können hingegen alle Positionen zwischen 0° und 360° verwendet werden.

Ein Implantatsystem der oben genannten Art, mit dem einerseits auf besonders einfache und zuverlässige Weise eine geeignete Indizierung des Implantats ermöglicht ist, wobei andererseits selbst bei gering gehaltener Bauhöhe eine besonders hohe Dichtigkeit zwischen Aufbauteil und Pfostenteil gewährleistet ist, ist aus der DE 10 2008 054 138 A1 bekannt. Bei diesem Implantatsystem weisen der Querschnitt des an das Aufbauteil angeformten Verbindungszapfens und der Querschnitt des diesem zugeordneten Aufnahmekanals jeweils eine Anzahl von Hauptrichtungen auf, in denen der Halbmesser jeweils einen relativen Maximalwert einnimmt, und wobei die Außenkontur des Querschnitts derart gewählt ist, dass sie an jedem Punkt genau eine Tangente aufweist. Die genannten Querschnitte sind somit beispielsweise oval oder elliptisch gewählt.

Damit ist erreicht, dass der Halbmesser des Querschnitts des Verbindungszapfens und dementsprechend der daran angepassten Aufnahmekanal im Pfostenteil, also der Radius oder Abstand der Außenkontur der Querschnittsfläche von deren Zentral- oder Mittelpunkt, insbesondere den Schwerpunkt, bezogen auf eine Rotation oder Verschwenkung um diesen, nicht konstant ist, sondern in einer Anzahl von Hauptrichtungen, also insbesondere in mindestens einer Hauptrichtung, Maximalwerte aufweist. Beim Einbringen des Verbindungszapfens in den Aufnahmekanal werden diese Hauptrichtungen von Verbindungszapfen einerseits und Aufnahmekanal andererseits in Überlappung gebracht, so dass die gewünschte Ausrichtung des am Verbindungszapfen angebrachten Aufbauteils relativ zum Pfostenteil eintritt.

Der Erfindung liegt nunmehr die Aufgabe zugrunde, ein Implantat-Teil für ein Dentalimplantat der oben genannten Art derart weiterzubilden, dass es eine noch weiter erhöhte mechanische Belastbarkeit und damit eine besonders hohe Langlebigkeit beim Einsatz im Patientenmund aufweist.

Diese Aufgabe wird erfindungsgemäß dadurch gelöst, dass der Halbmesser des Außenquerschnitts des den Aufnahmekanal aufweisenden Implantat-Teils in dessen Längsrichtung gesehen zumindest in einem Teilbereich, vorzugsweise im Indizierungsbereich, d. h. in demjenigen Bereich, in dem das Implantatsystem mit einer Indizierung versehen ist, innerhalb eines Toleranzbereichs jeder der Hauptrichtungen ebenfalls einen relativen Maximalwert einnimmt.

Der jeweilige Maximalwert des Halbmessers in Abhängigkeit vom Rotationswinkel um den Mittel- oder Schwerpunkt der Querschnittsfläche kann dabei - ebenso wie beim Querschnitt des Aufnahmekanals bzw. des Verbindungszapfens - der absolute Maximal- oder Höchstwert des Halbmessers oder auch ein lokaler oder relativer Maximalwert des Halbmessers sein, beim der Halbmesser in der jeweiligen Hauptrichtung einen größeren Wert annimmt als in unmittelbar benachbarten Ausrichtungen.

Die Erfindung geht von der Überlegung aus, dass die Ausführung des Aufnahmekanals mit einem nicht runden, eine Anzahl von lokalen Maxima des Halbmessers oder Radius aufweisenden Querschnitt im jeweiligen Implantat-Teil, in der Regel im Pfostenteil, zu einer in Rotation um dessen Längsachse gesehen variierenden Wandstärke führen würde, wenn dieses - wie allgemein üblich - mit rundem Außenquerschnitt ausgeführt ist. Insbesondere in Richtung der durch die Maximalwerte des Halbmessers im Querschnitt des Aufnahmekanals definierten Hauptrichtungen weist die Wandstärke des mit dem Aufnahmekanal versehenen Implantat-Teils in diesem Fall somit Minima auf, die in mechanischer Hinsicht Schwächungszonen entsprechen. Diese Schwächungszonen könnten insbesondere für die Dauerfestigkeit des Implantatsystems nachteilig sein, indem sie beispielsweise in unerwünschter Weise die Bildung von Mikrorissen oder dergleichen fördern könnten. Dem könnte mit entsprechend dick ausgeführter Wandstärke des jeweiligen Implantat-Teils begegnet werden, was aber je nach Ausführung und Anforderungsgrad zu unerwünscht großen Außendurchmessern des jeweiligen Implantat-Teils führen würde.

Um dies zu vermeiden und dennoch eine besonders hohe mechanische Festigkeit und damit Dauerbelastbarkeit des Implantatsystems zu gewährleisten, sollte der Außenquerschnitt des den Aufnahmekanal aufweisenden Implantat-Teils in der Art einer an den Aufnahmekanal angepassten Konturierung ausgeführt sein. Dazu ist vorgesehen, dass der Außenquerschnitt des jeweiligen Implantat-Teils zumindest im Verbindungsbereich mit dem Verbindungszapfen in Rotationsrichtung um seine Längsrichtung gesehen in denjenigen Bereichen ebenfalls lokale Maxima aufweist, in denen auch der Querschnitt des Aufnahmekanals die lokalen Maxima (und damit die genannten Hauptrichtungen) bildet.

Vorteilhafte Ausgestaltungen der Erfindung sind Gegenstand der Unteransprüche.

Vorteilhafterweise ist insbesondere der Außenquerschnitt des jeweiligen Implantat-Teils in seiner Kontur vergleichsweise genau an den Querschnitt des Aufnahmekanals angepasst. Um dies zu gewährleisten, beträgt der Toleranzbereich für die Ausrichtung der jeweiligen Hauptrichtungen, also der Hauptrichtungen des Außenquerschnitts des jeweiligen Implantat-Teils einerseits und der Hauptrichtungen des Querschnitts des Aufnahmekanals andererseits, vorzugsweise etwa 20°, weiter bevorzugt etwa 10°, besonders bevorzugt etwa 4°. Mit anderen Worten: Vorzugsweise stimmt die jeweilige Hauptrichtung des Außenquerschnitts des jeweiligen Implantat-Teils in einem Bereich von +-10°, weiter bevorzugt von +-5°, besonders bevorzugt von +-2°, mit der jeweils zugeordneten Hauptrichtung des Querschnitts des Aufnahmekanals überein.

In weiterer vorteilhafter Ausgestaltung ist die Anzahl der relativen Maximalwerte des Halbmessers des Außenquerschnitts des den Aufnahmekanal aufweisenden Implantat-Teils gleich der Anzahl oder ein ganzzahliges Vielfaches der Anzahl der Hauptrichtungen.

Um eine insgesamt besonders schlanke Bauweise der jeweiligen Bauteile, insbesondere des Pfostenteils, zu ermöglichen und damit den Einheilungs- und Integrationsprozess in den Knochen besonders zu begünstigen, ist - bei an sich möglichst gering gehaltenem Außendurchmesser des jeweiligen, den Aufnahmekanal aufweisenden Implantat-Teils - dieses in besonders vorteilhafter Ausgestaltung derart ausgebildet, dass seine Wandstärke im Indizierungsbereich über den Umfang gesehen eine Variation von höchstens 20 %, vorzugsweise von höchstens 10 %, besonders bevorzugt von höchstens 5 %, aufweist. Die Anpassung der Konturierungen des Querschnitts des Aufnahmekanals einerseits und des Außenquerschnitts des Implantat-Teils andererseits aneinander ist damit vorzugsweise derart weitgehend gewählt, dass eine Schwächung der Wandstärke und damit eine Reduzierung der mechanischen Belastbarkeit in diesen Bereichen entsprechend gering gehalten ist. Damit ist selbst bei der - an sich erwünschten - insgesamt schlanken Bauweise der Teile die Sicherstellung einer als ausreichend angesehenen mechanischen Festigkeit besonders zuverlässig ermöglicht.

In Längsrichtung von Verbindungszapfen oder Aufnahmekanal gesehen können beide mit gleichbleibendem Querschnitt ausgeführt sein. Vorteilhafterweise verjüngen sich die Querschnitte aber in Richtung zum freien Ende des Verbindungszapfens hin, in besonders vorteilhafter Ausgestaltung in konischer Ausführung, so dass sich auf besonders einfache Weise ein guter Kraftschluss bei hoher Dichtigkeit erzielen lässt.

Um im vorliegenden System, bei dem die Ausrichtung oder Indizierung des Aufbauteils relativ zum Pfostenteil konturbedingt erfolgt, auch die üblicherweise gewünschte hohe Dichtigkeit im mechanischen Kontaktbereich zwischen Aufbauteil und Pfostenteil, also insbesondere zwischen Verbindungszapfen und Innenfläche des Aufnahmekanals, besonders zuverlässig zu gewährleisten, ist in weiterer vorteilhafter Ausgestaltung vorgesehen, die Außenkontur der Querschnittsfläche des Verbindungszapfens und entsprechend des Aufnahmekanals auch zwischen den genannten Hauptrichtungen geeignet zu wählen. Dazu ist die Außenkontur vorteilhafterweise im Wesentlichen eckenfrei ausgeführt, so dass im Querschnitt jeder Punkt der Außenkontur genau eine Tangente aufweist.

Zudem ist eine besonders hohe Dichtigkeit erreichbar, indem in den Segmenten zwischen den Hauptrichtungen die Außenkontur bauchig oder nach außen gekrümmt oder gewölbt ausgestaltet ist. Durch diese Ausgestaltung ist bewirkt, dass bei einem Einbringen des Verbindungszapfens in den Aufnahmekanal Formfehler, also beispielsweise produktionsbedingte lokale Konturabweichungen oder dergleichen, zwischen den Querschnitten durch Verspannungen und daraus resultierende lokale Verformungen ausgeglichen werden und sich die Querschnitte aneinander angleichen. Die nach außen gekrümmte oder bauchige Ausgestaltung der Kontursegmente resultiert dabei in einer Analogie zu einem Kriterium eines Flächenovals, dass nämlich jede beliebige Gerade die jeweilige Querschnittsfläche in höchstens zwei Punkten schneidet.

In vorteilhafter Ausgestaltung ist die Außenkontur des Querschnitts zudem derart gewählt, dass sie in den Bereichen zwischen jeweils zwei Hauptrichtungen einem Ovalsegment entspricht. Mit anderen Worten: vorteilhafterweise erfüllt die Außenkontur in den Segmenten zwischen jeweils zwei Hauptrichtungen zusätzlich auch noch das zweite Kriterium eines Flächenovals, nämlich dass für jeden Punkt des Kontursegments genau eine Tangente existiert. Damit weist die Außenkontur im jeweiligen Segment einen vergleichsweise glatten Verlauf ohne Bildung von Ecken auf.

In besonders vorteilhafter Weiterbildung ist das Dentalimplantat zudem derart ausgestaltet, dass der an das Aufbauteil bzw. das jeweilige Implantat-Teil angeformte Verbindungszapfen und der diesem zugeordnete Aufnahmekanal im Pfostenteil bzw. im jeweils anderen Implantat-Teil jeweils vollständig unter Vermeidung von Ecken in der Querschnittskontur ausgebildet sind. Damit erfüllt der jeweilige Querschnitt vorteilhafterweise auch in den Punkten der Außenkontur in den jeweiligen Hauptrichtungen das zweite Kriterium eines Flächenovals, dass nämlich auch für diese Punkte genau eine Tangente existiert, und bildet somit in seiner Gesamtheit ein Oval. Damit weist die Außenkontur auch in den jeweiligen Hauptrichtungen einen gerundeten Verlauf auf. Gerade durch diesen auch in den Hauptrichtungen gegebenen vergleichsweise runden Verlauf ist gewährleistet, dass beim Einbringen des Verbindungszapfens in den Aufnahmekanal eventuelle geringfügige Fehlausrichtungen in der Orientierung selbsttätig in der Art einer geführten Selbstzentrierung ohne Versperrungen, Klemmungen oder Verhakungen korrigiert werden.

Ganz besonders bevorzugt kommt das Implantat-Teil in einem Dental-Implantatsystem gemeinsam mit einem zugeordneten zweiten Implantat-Teil oder Abutment zum Einsatz. Ein derartiges besonders bevorzugtes Dental-Implantatsystem umfasst das zur Einbringung in einen Kieferknochen vorgesehene, außenseitig mit einem Außengewinde versehene erste Implantat-Teil und ein diesem zugeordnetes, zur Anbringung eines Zahnersatzstücks vorgesehenes zweites Implantat-Teil, wobei die Implantat-Teile über einen an das zweite Implantat-Teil angeformten, in einen im ersten Implantat-Teil vorgesehenen Aufnahmekanal einschiebbaren Verbindungszapfen mechanisch miteinander verbindbar sind, und wobei der Querschnitt des Verbindungszapfens und der Querschnitt des diesem zugeordneten Aufnahmekanals in einem Indizierungsbereich jeweils eine Anzahl von Hauptrichtungen aufweisen, in denen der Halbmesser jeweils einen relativen Maximalwert und damit einen größeren Wert annimmt als in unmittelbar benachbarten Ausrichtungen, wobei in Längsrichtung des ersten Implantat-Teils gesehen zumindest teilweise der Halbmesser des Außenquerschnitts des den Aufnahmekanal aufweisenden ersten Implantat-Teils innerhalb eines Toleranzbereichs jeder der Hauptrichtungen ebenfalls einen relativen Maximalwert und damit einen größeren Wert annimmt als in unmittelbar benachbarten Ausrichtungen.

Die mit der Erfindung erzielten Vorteile bestehen insbesondere darin, dass durch die im Verbindungsbereich von Verbindungszapfen und Aufnahmekanal vorgesehene Anpassung der Querschnittskonturen des Aufnahmekanals einerseits und des Außenquerschnitts des jeweiligen Implantat-Teils andererseits auch bei insgesamt schlanker, den Einheilungsprozess begünstigender Ausführung gerade des Pfostenteils eine zuverlässige Indizierung ohne übermäßige materialseitige Schwächung des jeweiligen Implantat-Teils, insbesondere des Pfostenteils, ermöglicht ist. Damit kann das Pfostenteil mit entsprechend hoher mechanischer Festigkeit und Belastbarkeit ausgeführt sein. Dabei ist insbesondere die Dauerfestigkeit des Systems begünstigt, da durch die genannten Schwächungszonen bei andauernder Belastung, wie dies beim Einsatz im Patientenmund üblich ist, im besonderen Maße mit einer Bildung von Mikrorissen oder dergleichen zu rechnen ist.

Für den Fall, dass der Aufnahmekanal im Pfostenteil angebracht ist und dieses demzufolge mit einem nicht runden, entsprechend angepassten Außenquerschnitt versehen ist, kann dieses im Übrigen mit einem im zur Verankerung im Patientenmund vorgesehenen Außengewinde versehen sein. Dieses weist sodann - entsprechend angepasst an den Aufnahmekanal - einen Gewindekern mit nicht rundem Querschnitt - entsprechend dem genannten Außenquerschnitt des Pfostenteils - auf, wobei aber der Außenquerschnitt des den Gewindekern umgebenden Gewindes zur Erleichterung der Montage im Patientenmund seinerseits mit rundem Außenquerschnitt versehen sein kann.

Ein Ausführungsbeispiel der Erfindung wird anhand einer Zeichnung näher erläutert. Darin zeigen:
- FIG. 1: ein Dentalimplantat in angeschnittener Darstellung,
- FIG. 2: das Dentalimplantat nach FIG. 1 in Explosionsdarstellung,
- FIG. 3: ein Pfostenteil zur Verwendung im Dentalimplantat nach FIG. 1,
- FIG. 4: ein alternatives Pfostenteil in geschnittener Ansicht, und
- FIG. 5 bis 9: jeweils im Querschnitt den Indizierungsbereich des Dental-Implantat-systems nach FIG. 1.
Gleiche Teile sind in allen Figuren mit denselben Bezugszeichen versehen.

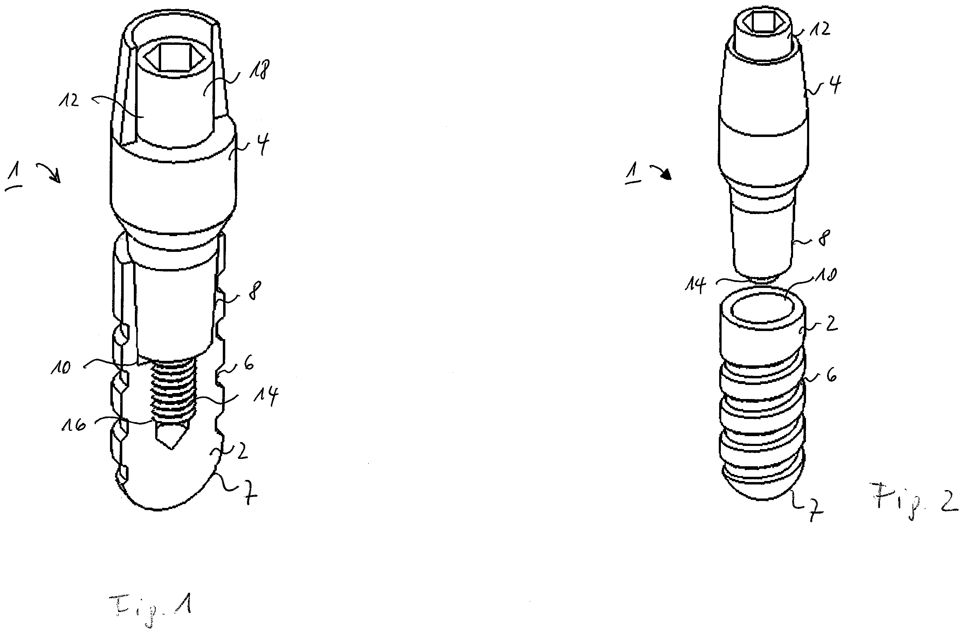

Das in FIG 1 angeschnitten im montierten Zustand und in FIG. 2 als Explosionszeichnung dargestellte Dentalimplantat 1 oder Dental-Implantatsystem ist zum Einsatz in den Kieferknochen anstelle eines extrahierten oder ausgefallenen Zahnes vorgesehen, um dort ein als Zahnersatz dienendes prothetisches Teil oder eine Krone zu halten. Das Dentalimplantat 1 ist dazu mehrteilig ausgeführt und umfasst ein als so genanntes Pfostenteil ausgeführtes erstes Implantat-Teil 2 und ein diesem zugeordnetes, zur Anbringung eines Zahnersatzstücks vorgesehenes, auch als Aufbauteil bezeichnetes zweites Implantat-Teil 4.

Das erste Implantat-Teil 2 oder Pfostenteil ist dabei außenseitig mit einem Außengewinde 6 versehen, das insbesondere am apikalen Ende 7 als selbstschneidendes Schraubengewinde ausgestaltet ist. Damit kann das erste Implantat-Teil 2 oder Pfostenteil durch Einschrauben an der vorgesehenen Stelle in den Kieferknochen eingesetzt werden. Die Steigung des Gewindes 6 kann dabei gleichmäßig oder auch veränderlich ausgeführt sein, wobei durch geeignete Parameterwahl auch evtl. unterschiedliche biologische Gegebenheiten oder dergleichen sowie unterschiedliches Einwachsverhalten berücksichtigt sein können. Die Konstruktion und Auslegung des Gewindes 6 ist dabei insbesondere im Hinblick auf eine gewünschte hohe Primärstabilität und eine gleichmäßige Weiterleitung der bei Kaubelastung des Dentalimplantats 1 auftretenden Kräfte in den Kieferknochen ausgelegt.

Um nach geeigneter Anbringung des Zahnersatzstücks oder der Prothese am Aufbauteil oder zweiten Implantat-Teil 4 ein Einbringen in das Pfostenteil oder erste Implantat-Teil 2 bei hoher mechanischer Stabilität zu ermöglichen, ist an das zweite Implantat-Teil 4 ein Verbindungszapfen 8 angeformt, der in einen zugeordneten, im ersten Implantat-Teil 2 vorgesehenen Aufnahmekanal 10 einschiebbar ist. Durch das Einschieben des Verbindungszapfens 8 in den Aufnahmekanal 10 entsteht eine mechanische Verbindung der Implantat-Teile 2, 4 miteinander. Die mechanische Verbindung von Pfostenteil 2 und Aufbauteil 4 erfolgt über eine zugeordnete Verbindungsschraube 12, deren Außengewinde 14 in ein im Pfostenteil 2 vorgesehenes Innengewinde 16 eingeschraubt wird. Der Schraubenkopf 18 der Verbindungsschraube 12 presst dabei das Aufbauteil 4 auf das Pfostenteil 2.

Das Dentalimplantat 1 ist gezielt dafür ausgelegt, bei geeigneter Vorbereitung des Aufbauteils 4 eine zuverlässige und mechanisch stabile rotatorische Ausrichtung des Aufbauteils 4 selbst beim Auftreten vergleichsweise hoher Kräfte, insbesondere durch die Kaubelastung, zu gewährleisten. Dabei soll insbesondere auch die Einbringung und das Eingliedern des mit dem Zahnersatzstück versehenen Aufbauteils 4 in das in dem Kieferknochen eingewachsene Pfostenteil 2 in verhältnismäßig kurzer Behandlungszeit erfolgen können. Dazu ist der Verbindungszapfen 8 in seiner Außenkontur an die Innenkontur des Aufnahmekanals 10 angepasst, wobei beide in Längsrichtung gesehen konisch geformt sein können.

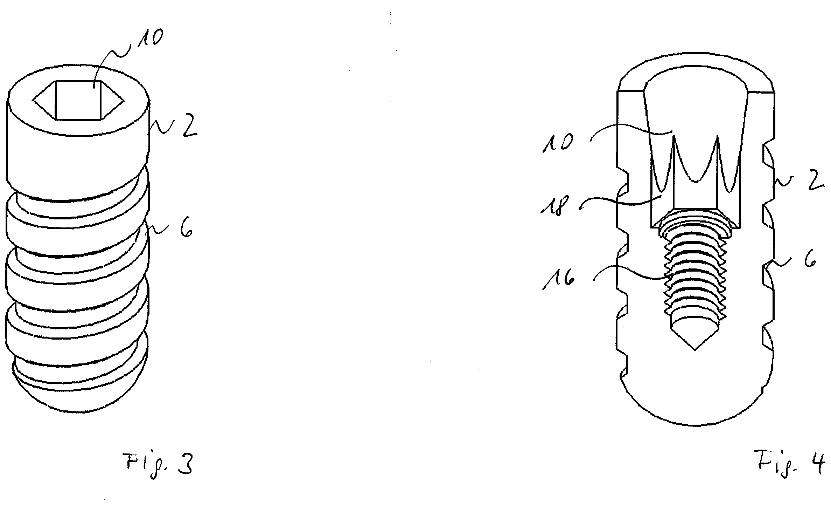

Die Außenkontur des Verbindungszapfens 8 - und dementsprechend angepasst die Innenkontur des Aufnahmekanals 10-sind im Ausführungsbeispiel als solche im Querschnitt mit einer mehrzähligen Symmetrie ausgestaltet, so dass beim Zusammenfügen der genannten Komponenten ein rotatorisches Gesperre entsteht und damit eine zuverlässige rotatorische Ausrichtung des Aufbauteils 4 relativ zum Pfostenteil 2 eingestellt werden kann. Beispielhaft ist hierfür in FIG. 3 das erste Implantat-Teil 2 oder Pfostenteil mit einem Aufnahmekanal 10 gezeigt, der in der Art einer Sechskant-Ausführung eine sechszählige Symmetrie aufweist. Als alternatives Ausführungsbeispiel ist in FIG. 4 in geschnittener Darstellung ein Pfostenteil oder erstes Implantat-Teil 2 gezeigt, bei dem zum Zweck einer Indizierung oder zur Ausbildung eines rotatorischen Gesperres endseitig am Verbindungszapfen 8 ein zusätzliches Indizierungselement mit seinerseits einem Querschnitt mit mehrzähliger Symmetrie angeordnet ist, das im montierten Zustand in ein entsprechendes, zugeordnetes Endkanalstück 18 im Aufnahmekanal 10 eingreift.

In beiden Varianten des Dentalimplantats 1 weisen somit der Querschnitt des an das Aufbauteil 4 angeformten Verbindungszapfens 8 und entsprechend der Querschnitt des diesem zugeordneten Aufnahmekanals 10, wie dies in den Querschnittsdarstellungen gemäß den FIG. 4 bis 9 erkennbar ist, im Indizierungsbereich jeweils eine Anzahl von Hauptrichtungen 20 auf, in denen der Halbmesser jeweils einen relativen Maximalwert einnimmt. Die genannten Querschnitte sind somit beispielsweise oval oder elliptisch oder, wie dargestellt, insbesondere als Sechskant gewählt.

Damit ist erreicht, dass der Halbmesser des Querschnitts des Verbindungszapfens 8 und dementsprechend der daran angepassten Aufnahmekanal 10 im Pfostenteil 2, also der Radius oder Abstand der Außenkontur der Querschnittsfläche von deren Zentral- oder Mittelpunkt, insbesondere den Schwerpunkt, bezogen auf eine Rotation oder Verschwenkung um diesen, nicht konstant ist, sondern in den Hauptrichtungen 20 Maximalwerte aufweist. Beim Einbringen des Verbindungszapfens 8 in den Aufnahmekanal werden 10 diese Hauptrichtungen von 20 Verbindungszapfen 8 einerseits und Aufnahmekanal 10 andererseits in Überlappung gebracht, so dass die gewünschte Ausrichtung des am Verbindungszapfen 8 angebrachten Aufbauteils 4 relativ zum Pfostenteil 2 eintritt.

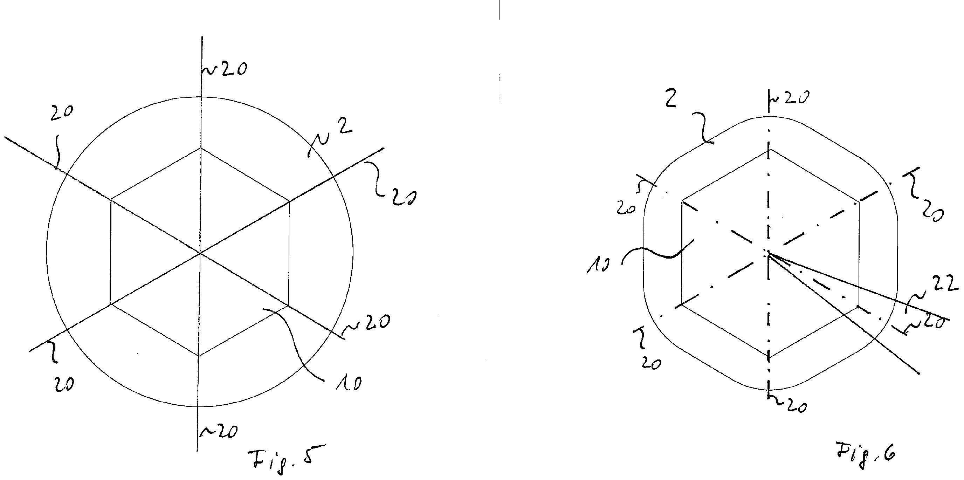

Grundsätzlich, wie dies der Darstellung für ein bekanntes Implantatsystem in FIG. 5 entnehmbar ist, ist der Außenquerschnitt des Pfostenteils oder ersten Implantat-Teils 2 rund ausgeführt. Dadurch kommt es in den Bereichen der Hauptrichtungen 20 zur Ausbildung vergleichsweise dünnwandiger Bereiche mit nur geringer Wandstärke. Diese Schwächungszonen könnten somit insbesondere bei Dauerbelastung die Ausbildung von Mikrorissen oder dergleichen im Materialkörper begünstigen, die letztendlich zu Materialbrüchen führen könnten.

Das Dentalimplantat 1 ist demgegenüber gezielt derart ausgeführt, dass es eine besonders hohe mechanische Belastbarkeit und damit eine besonders hohe Langlebigkeit beim Einsatz im Patientenmund aufweist. Um dabei auch bei vergleichsweise schlanker Bauweise der Komponenten mechanische Schwachstellen durch zu dünne Wandstärken gezielt zu vermeiden, ist der Außenquerschnitt des Pfostenteils 2 zumindest im Indizierungsbereich an den genannten Querschnitt des Aufnahmekanals 10 angepasst. Wie insbesondere der Darstellung im Querschnitt gem. FIG. 6 entnehmbar ist, nimmt der Halbmesser des Außenquerschnitts des den Aufnahmekanal 10 aufweisenden Implantat-Teils 2 im Indizierungsbereich innerhalb eines Toleranzbereichs 22 jeder der Hauptrichtungen 20 ebenfalls einen relativen Maximalwert ein. Im Ausführungsbeispiel ist dabei ein Toleranzbereich von etwa 4° vorgegeben, d. h. innerhalb einer zugelassenen Abweichung von etwa +-2° liegen die Maximalwerte des Halbmessers des Außenquerschnitts des den Aufnahmekanal 10 aufweisenden Implantat-Teils 2 in Richtung der jeweiligen Hauptrichtung 20 (so genannte "in Phase-Orientierung").

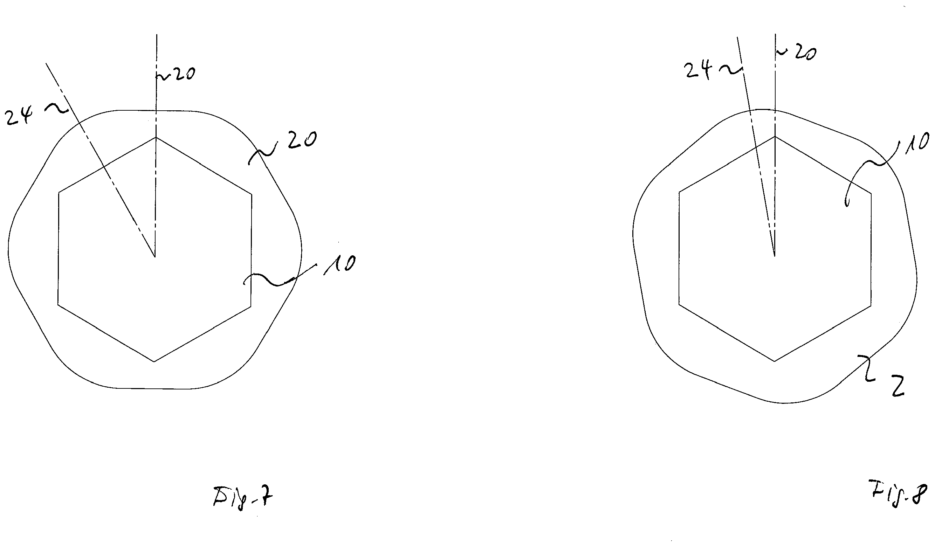

Ein Beispiel für eine im vorliegenden Sinne ungünstige Orientierung ist demgegenüber in FIG. 7 gezeigt, bei der die durch die Linie 24 symbolisierte Richtung des Maximalwerts für den Halbmesser des Außendurchmesser des Pfostenteils 2 um mehr als die gewünschten 10° von der Hauptrichtung 20 abweicht. Zum Vergleich ist in FIG. 8 ein Beispiel gezeigt, bei dem die Richtungsabweichung zwischen der Linie 24 und der Hauptrichtung 20 etwa 10° beträgt und das somit als akzeptabel im vorliegenden Sinne angesehen wird.

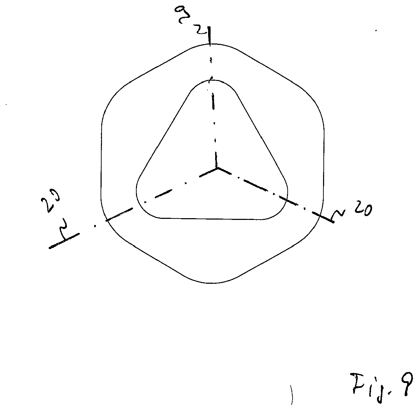

Zudem ist die Anzahl der relativen Maximalwerte des Halbmessers des Außenquerschnitts des den Aufnahmekanal 10 aufweisenden Implantat-Teils 2 in den gezeigten Beispielen gleich der Anzahl oder einem ganzzahligen Vielfachen der Anzahl der Hauptrichtungen 20. Ein Beispiel für letztere Variante ist in der Darstellung in FIG. 9 gezeigt, bei der für drei Hauptrichtungen 20 sechs Maxima in der Außenkontur des Pfostenteils 2 vorgesehen sind.

Für eine als ausreichend angesehene mechanische Stabilität des Dental-Implantatsystems 1 ist dieses zudem derart ausgeführt, dass die Wandstärke des den Aufnahmekanal 10 aufweisenden Implantat-Teils 2 im Indizierungsbereich über den Umfang gesehen eine Variation von höchstens 20 %, vorzugsweise von höchstens 10 %, besonders bevorzugt von höchstens 5 %, aufweist.

Beim Dentalimplantat 1 ist zudem die Außenkontur des Querschnitts des Verbindungszapfens 8 und entsprechend des Aufnahmekanals 10 derart gewählt, dass sie von jeder beliebigen Geraden höchstens in zwei Punkten geschnitten wird. Damit ist eine besonders hohe Dichtigkeit bei der Montage des Systems erreichbar, da dadurch in den Segmenten zwischen den Hauptrichtungen 20 die Außenkontur des Querschnitts bauchig oder nach außen gekrümmt oder gewölbt ausgestaltet ist. Durch diese Ausgestaltung ist bewirkt, dass bei einem Einbringen des Verbindungszapfens 8 in den Aufnahmekanal 10 Formfehler, also beispielsweise produktionsbedingte lokale Konturabweichungen oder dergleichen, zwischen den Querschnitten durch Verspannungen und daraus resultierende lokale Verformungen ausgeglichen werden und sich die Querschnitte aneinander angleichen. Die nach außen gekrümmte oder bauchige Ausgestaltung der Kontursegmente resultiert dabei in einer Analogie zu einem Kriterium eines Flächenovals, dass nämlich jede beliebige Gerade die jeweilige Querschnittsfläche in höchstens zwei Punkten schneidet.

### Bezugszeichenliste

- 1: Dental-Implantatsystem
- 2: Implantat-Teil
- 4: Implantat-Teil
- 6: Außengewinde
- 7: apikales Ende
- 8: Verbindungszapfen
- 10: Aufnahmekanal
- 12: Verbindungsschraube
- 14: Außengewinde
- 16: Innengewinde
- 18: Endkanalstück
- 20: Hauptrichtung
- 22: Toleranzbereich

## Patentansprüche

1. Zur Einbringung in einen Kieferknochen vorgesehenes, außenseitig mit einem Außengewinde (6) versehenes Implantat-Teil (2), das zur mechanischen Verbindung mit einem zugeordneten zweiten Implantat-Teil (4) einen Aufnahmekanal (10) für einen an das zweite Implantat-Teil (4) angeformten Verbindungszapfen (8) aufweist, wobei der Querschnitt des Aufnahmekanals (10) in einem Indizierungsbereich jeweils eine Anzahl von Hauptrichtungen (20) aufweist, in denen der Halbmesser jeweils einen relativen Maximalwert und damit einen größeren Wert annimmt als in unmittelbar benachbarten Ausrichtungen, **dadurch gekennzeichnet, dass** in Längsrichtung des Implantat-Teils (2) gesehen zumindest teilweise der Halbmesser des Außenquerschnitts des Implantat-Teils (2) innerhalb eines Toleranzbereichs (22) jeder der Hauptrichtungen (20) ebenfalls einen relativen Maximalwert und damit einen größeren Wert annimmt als in unmittelbar benachbarten Ausrichtungen.

2. Implantat-Teil (2) nach Anspruch 1, **dadurch gekennzeichnet, dass** der Toleranzbereich (22) jeder der Hauptrichtungen (20) etwa +-10°, vorzugsweise etwa +-5°, beträgt.

3. Implantat-Teil (2) nach Anspruch 1 oder 2, **dadurch gekennzeichnet, dass** die Anzahl der relativen Maximalwerte des Halbmessers des Außenquerschnitts gleich der Anzahl oder ein ganzzahliges Vielfaches der Anzahl der Hauptrichtungen (20) ist.

4. Implantat-Teil (2) nach einem der Ansprüche 1 bis 3, **dadurch gekennzeichnet, dass** die Wandstärke des Implantat-Teils (2) im mit den Maximalwerten des Halbmessers versehenen Bereich über den Umfang gesehen eine Variation von höchstens 20 %, vorzugsweise von höchstens 10 %, besonders bevorzugt von höchstens 5 %, aufweist.

5. Implantat-Teil (2) nach einem der Ansprüche 1 bis 4, dessen Aufnahmekanal (10) konisch ausgestaltet ist.

6. Implantat-Teil (2) nach einem der Ansprüche 1 bis 5, bei dem die Außenkontur des Querschnitts derart gewählt ist, dass sie von jeder beliebigen Geraden höchstens in zwei Punkten geschnitten wird.

## Claims

1. An implant part (2) which is provided for being introduced into a jaw bone, which is provided on its outside with an external thread (6) and which has a receiving duct (10) for a connection pin (8) integrally formed on a second implant part (4), for the purpose of being mechanically connected to the associated second implant part (4), the cross-section of the receiving duct (10) having, in an indexing region, in each case a number of primary directions (20) in which the radius in each case adopts a relative maximum value and, thus, a higher value than in immediately adjacent orientations, **characterized in that**, viewed in longitudinal direction of the implant part (2), the radius of the outer cross-section of the implant part (2) also adopts, at least partially, within a tolerance range (22) of each of the primary directions (20), a relative maximum value and, thus, a higher value than in immediately adjacent orientations.

2. The implant part (2) of claim 1, **characterized in that** the tolerance range (22) of each of the primary directions (20) is approximately ±10°, preferably approximately ±5°.

3. The implant part (2) of claim 1 or 2, **characterized in that** the number of relative maximum values of the radius of the outer cross-section is equal to the number or an integral multiple of the number of primary directions (20).

4. The implant part (2) of any of claims 1 to 3, **characterized in that** the wall thickness of the implant part (2) in the region provided with the maximum values of the radius, viewed over the periphery, varies by at most 20 %, preferably by at most 10 %, particularly preferably by at most 5 %.

5. The implant part (2) of any of claims 1 to 4, whose receiving duct (10) is of a conical shape.

6. The implant part (2) of any of claims 1 to 5, wherein the outer contour of the cross-section is selected in such a way that it is intersected in at most two points by any straight lines.

## Revendications

1. Partie d'implant (2) destinée à être mise en place dans un os de mâchoire, pourvue à l'extérieur d'un filet extérieur (6) et ayant un canal de réception (10) pour une goupille de liaison (8) formée sur une deuxième partie d'implant (4), destinée à être reliée mécaniquement à dite deuxième partie d'implant (4) y affectée, la section du canal de réception (10) ayant, dans une région d'indexage, à chaque fois un nombre de directions primaires (20) dans lesquelles le rayon prend à chaque fois une valeur maximale relative et donc une valeur plus élevée que dans les orientations immédiatement adjacentes, **caractérisée en ce que**, vu en direction longitudinale de la partie d'implant (2), le rayon de la section extérieure de la partie d'implant (2) prend aussi, au moins partiellement, dans une gamme de tolérance (22) de chacune des directions primaires (20), une valeur maximale relative et donc une valeur plus élevée que dans les orientations immédiatement adjacentes.

2. Partie d'implant (2) selon la revendication 1, **caractérisée en ce que** la gamme de tolérance (22) de chacune des directions primaires (20) est environ ±10°, de préférence environ ±5°.

3. Partie d'implant (2) selon la revendication 1 ou 2, **caractérisée en ce que** le nombre de valeurs maximales relatives du rayon de la section extérieure est égal au nombre ou à un multiple entier du nombre de directions primaires (20).

4. Partie d'implant (2) selon l'une quelconque des revendications 1 à 3, **caractérisée en ce que** l'épaisseur de paroi de la partie d'implant (2) dans la région pourvue des valeurs maximales du rayon, vu sur la périphérie, varie par au maximum 20 %, de préférence par au maximum 10 %, de préférence particulière par au maximum 5 %.

5. Partie d'implant (2) selon l'une quelconque des revendications 1 à 4, dont le canal de réception (10) est de forme conique.

6. Partie d'implant (2) selon l'une quelconque des revendications 1 à 5, dont le contour extérieur de la section est choisi de façon à ce qu'il soit coupé par une ligne droite quelconque dans deux points au maximum.
